# EUROPÄISCHE PATENTSCHRIFT

(11) **EP 1 251 016 B1**
(45) Veröffentlichungstag und Bekanntmachung des Hinweises auf die Patenterteilung: **14.06.2006**
(21) Anmeldenummer: 02008367.1
(22) Anmeldetag: 12.04.2002
(51) Int. Cl.: B60D 1/46

(54) **Anhängerkupplung für ein Fahrzeug, insbesondere für einen Ackerschlepper**
Trailer hitch for a vehicle, especially for an agricultural tractor
Attelage de remorque pour un véhicule, notamment pour un tracteur agricole

(30) Priorität: 18.04.2001 DE 10118862
(43) Veröffentlichungstag der Anmeldung: 23.10.2002
(60) Teilanmeldung: 04006181.4
(73) Patentinhaber: Sauermann, Hans, D-86558 Freinhausen (DE)
(72) Erfinder: Sauermann, Hans, D-86558 Freinhausen (DE)
(74) Vertreter: Witzany, Manfred

(56) Entgegenhaltungen:
- EP-A- 0 843 956
- EP-A- 0 876 929
- US-A- 2 850 293
- US-A- 3 664 686
- US-A- 3 708 183

## Beschreibung

Die Erfindung betrifft eine Anhängerkupplung gemäß dem Oberbegriff des Patentanspruchs 1.

Aus der AT 406 849 B ist eine Kupplungsvorrichtung zwischen einem Zugfahrzeug, insbesondere einem Ackerschlepper, und einem Anhänger bekannt. Diese Kupplungsvorrichtung wird von zwei Wangen gebildet, die heckseitig am Akkerschlepper gehalten sind. Zwischen diesen Wangen ist ein Kupplungsglied in Form eines Kupplungsmauls mit zurückziehbarem Kupplungsbolzen Höhenverstellbar gehalten. Am unteren Ende ist an die Wangen eine horizontale Platte angeschweißt, an der ein Kupplungsglied in Form eines Kugelkopfes befestigt ist. Soll das Kupplungsglied gewechselt werden, so muß die gesamte Kupplungsvorrichtung einschließlich der schweren Wangen und der Platte vom Ackerschlepper abgebaut werden, was aufgrund der großen Masse dieser Teile relativ aufwendig ist.

Der Erfindung liegt die Aufgabe zugrunde, eine Anhängerkupplung der eingangs genannten Art zu schaffen, die ein einfaches Austauschen des Kupplungsglieds ermöglicht. Zusätzlich soll die Anhängerkupplung robust und zuverlässig sein.

Diese Aufgabe wird erfindungsgemäß mit den Merkmalen des Patentanspruchs 1 gelöst.

Die Anhängerkupplung gemäß Anspruch 1 weist zwei vertikale Wangen auf, die im wesentlichen eine Abstützfunktion besitzen. Diese Wangen weisen vorzugsweise im unteren Endbereich einander zugewandte, horizontale Führungsnuten auf, in die eine Platte einschiebbar ist. Diese Platte trägt ein Kupplungsglied, das die Verbindung zu einem Anhänger herstellt. Als Kupplungsglied ist insbesondere an einen Kugelkopf bzw. einen Piton gedacht. Das Kupplungsglied ist vorzugsweise unlösbar mit der Platte verbunden, so daß die auf den Anhänger ausgeübte Zugkraft verschleißfrei vom Kupplungsglied auf die Platte übertragen wird. Um eine sichere Kraftübertragung zwischen den Wangen und der darin verschiebbar gehaltenen Platte zu gewährleisten, ist die Platte durch mindestens einen Steckbolzen gegenüber der Wange arretierbar. Dieser Steckbolzen ist ausreichend groß dimensioniert, um die Zugkraft vom Fahrzeug auf den Anhänger übertragen zu können. Damit der Steckbolzen in eine die Platte arretierende Lage verschiebbar ist, ist es erforderlich, daß er mit Spiel in der Wange und der Platte gehalten ist. In der Regel reicht ein Spiel von höchstens 0,3 mm aus, um eine ausreichend leichtgängige Führung des Steckbolzens zu erzielen. Dieses Spiel führt jedoch beim Anfahren und Bremsen des Fahrzeugs zu erheblichen Schlägen des Steckbolzens gegen die Platte bzw. die Wange, was zu einer übermäßigen Materialbeanspruchung führt. Um einer Deformation des Steckbolzens, der Platte und der Wange vorzubeugen, ist es vorteilhaft, wenn der Steckbolzen in einen Exzenter eingreift. Durch Verdrehen des Exzenters läßt sich das erwähnte Spiel sehr einfach ausgleichen, wobei durch den Exzenter auch das erforderliche Spiel zwischen der Platte und den Führungsnuten der Wangen ausgeglichen wird.

Um eine gute, formschlüssige Abstützung des Steckbolzens in der Wange zu erzielen, ist es gemäß Anspruch 2 günstig, diesen in einer vertikalen Führungsnut oder Bohrung zu halten. Die Platte weist vorzugsweise eine Bohrung oder seitliche Einbuchtung auf, in die der Steckbolzen formschlüssig eingreift.

Insbesondere bei landwirtschaftlichen Fahrzeugen kommt es häufig vor, daß beim Befahren unebener Feldwege erhebliche Stöße auf das Fahrzeug und damit auch auf die Anhängerkupplung ausgeübt werden. Um auch unter rauhen Betriebsbedingungen ein sicheres Halten des Steckbolzens in einer die Platte arretierenden Lage zu gewährleisten, ist es gemäß Anspruch 3 vorteilhaft, den Steckbolzen durch einen Sicherungsstift zu sichern. Dieser Sicherungsstift durchsetzt eine Querbohrung des Bolzens, die in der Arretierlage des Steckbolzens mit einer entsprechenden horizontalen Bohrung der Wange fluchtet. Der Sicherungsstift greift dabei in diese horizontale Bohrung der Wange ein, so daß ein ungewolltes Verschieben des Steckbolzens ausgeschlossen ist.

Grundsätzlich kann der Steckbolzen einen beliebig geformten Querschnitt aufweisen, so lange er in der Lage ist, die im Betrieb auftretenden Schub- und Zugkräfte zu übertragen. Dringt der Steckbolzen in eine vertikale Bohrung der Wange ein, so ist gemäß Anspruch 4 ein kreisförmiger Querschnitt des Steckbolzens vorzuziehen, um eine optimale Anpassung des Steckbolzens an die Bohrung zu erzielen. Wird der Steckbolzen dagegen in einer Führungsnut der Wange gehalten, so ist ein rechteckförmiger Querschnitt des Steckbolzens vorzuziehen.

Gemäß Anspruch 5 ist es vorteilhaft, wenn der Exzenter verdrehbar an der Platte bzw. Wange gehalten ist. Damit ergibt sich im Fahrbetrieb eine spielfreie Kraftübertragung von den Wangen auf das Kupplungsglied, so daß sich die Anhängerkupplung durch eine hohe Lebensdauer auszeichnet.

Um die Kraft der Schrauben möglichst gleichmäßig auf die Stirnfläche der Platte zu übertragen, ist es gemäß Anspruch 6 günstig, in der horizontalen Führungsnut der Wange eine stirnseitig gegen die Latte drückende Leiste zu halten. Diese Leiste hat den zusätzlichen Vorteil, daß sie sehr leicht und ohne großen Aufwand auszutauschen ist, wenn sie während des Betriebs beschädigt wurde.

Alternativ oder zusätzlich ist es gemäß Anspruch 7 günstig, mit mindestens einer Schraube stirnseitig gegen die Platte oder Leiste zu drücken. Zu diesem Zweck weist wenigstens eine der Wangen im Bereich der Führungsnut mindestens eine Gewindebohrung auf, die zur Aufnahme der Schrauben dient. Diese Schrauben pressen die Platte oder Leiste gegen die gegenüberliegende Führungsnut sowie gegen den Steckbolzen, so daß auch hierbei eine spielfreie Kraftübertragung auf das Kupplungsglied gewährleistet ist. Vorzugsweise sind mehrere Schrauben vorgesehen, die gegen die gleiche Stirnfläche der Platte oder Leiste drücken, um eine möglichst gleichmäßige Abstützung der Platte oder Leiste zu gewährleisten.

Für den Fall, daß nur eine Schraube vorgesehen ist, die gegen die Stirnfläche der Platte oder Leiste drückt, ist es gemäß Anspruch 8 vorteilhaft, diese fluchtend auf den Steckbolzen auszurichten. Damit wirkt die Druckkraft der Schraube exakt auf den Steckbolzen, um dessen Spiel bestmöglich auszuschalten.

Um die Haltewirkung der Schraube zu verbessern, ist es gemäß Anspruch 9 vorteilhaft, wenn diese in eine stirnseitige Vertiefung der Platte oder Leiste eintaucht. Damit wird die Schraube zur Platte oder Leiste ausreichend sicher zentriert. Um die Zentrierwirkung der Schraube weiter zu verbessern, ist es günstig, das Schraubenende konisch oder ballig gerundet auszubilden, wobei die Vertiefung an die Form des Schraubenendes angepaßt ist. Damit zentriert sich die Platte oder Leiste selbsttätig beim Festziehen der Schrauben in die korrekte Lage, um das Spiel auszuschalten.

Weisen die Leiste bzw. die Stirnseite der Platte gemäß Anspruch 10 zueinander passende Schrägflächen auf, so wird die Platte beim Festziehen der Schrauben vorteilhaft in eine vorgegebene vertikale Richtung gedrückt. Auf diese Weise wird auch das vertikale Spiel der Platte in den Führungsnuten der Wangen ausgeglichen. Außerdem ist es günstig, die Platte bzw. die Leiste im gegenseitigen Anlagebereich mit einer strukturierten Oberfläche auszubilden. Vorzugsweise weist die Leiste ein Rautenmuster mit einer Tiefe zwischen 1 mm und 2 mm auf. Durch diese strukturierte Oberfläche ist eine rutschfeste Arretierung der Platte durch die Leiste gewährleistet.

Der Erfindungsgegenstand wird beispielhaft anhand der Zeichnung erläutert, ohne den Schutzumfang zu beschränken.

Es zeigt:
- Figur 1: eine räumliche Darstellung einer Anhängerkupplung,
- Figur 2: eine Schnittdarstellung durch die Anhängerkupplung gemäß Figur 1 entlang der Schnittlinie II-II,
- Figur 3: eine zugeordnete Schnittdarstellung durch die Anhängerkupplung entlang der Schnittlinie III-III,
- Figur 4: eine vergrößerte Ansicht der Oberflächenstrukturierung einer Leiste,
- Figur 5: eine Schnittdarstellung durch die Leiste gemäß Figur 4 entlang der Schnittlinie V-V,
- Figur 6: eine Schnittdarstellung gemäß Figur 2 einer ersten alternativen Ausführungsform,
- Figur 7: eine Schnittdarstellung gemäß Figur 3 einer zweiten alternativen Ausführungsform,
- Figur 8: eine Schnittdarstellung gemäß Figur 2 einer dritten alternativen Ausführungsform und
- Figur 9: eine zugeordnete Schnittdarstellung durch die Ausführungsform gemäß Figur 8 entlang der Schnittlinie IX-IX.

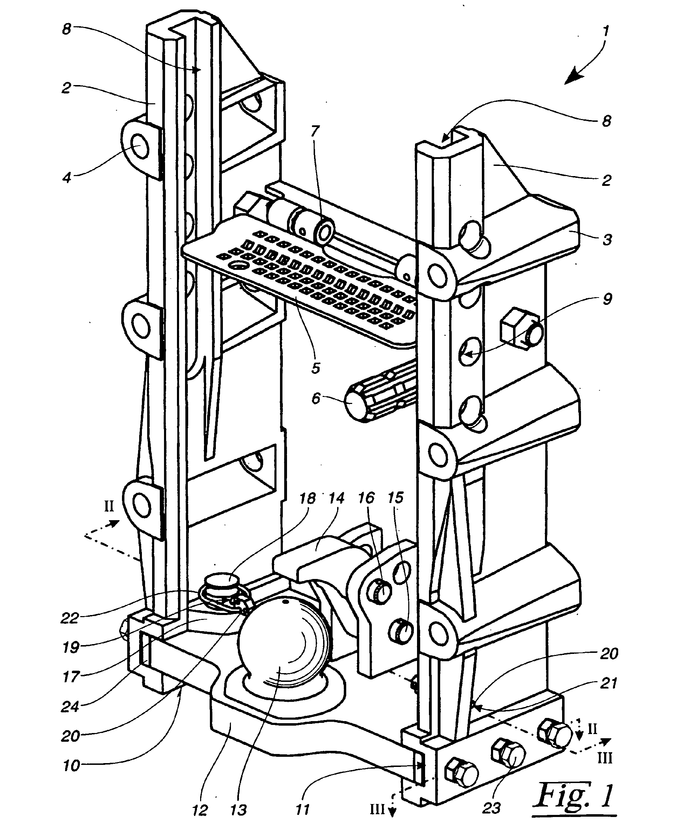

Figur 1 zeigt eine räumliche Darstellung einer Anhängerkupplung 1, die heckseitig an einem nicht dargestellten Fahrzeug, insbesondere an einem Ackerschlepper angebracht ist. Diese Anhängerkupplung 1 besteht aus zwei Wangen 2, die vertikal und zueinander parallel ausgerichtet sind. Diese Wangen 2 weisen jeweils drei Befestigungslaschen 3 auf, die von Durchgangsbohrungen 4 durchsetzt sind. Diese Durchgangsbohrungen 4 dienen zur Aufnahme von nicht dargestellten Haltemitteln, die die Wangen 2 am Fahrzeugheck festlegen.

Die beiden Wangen 2 werden innenseitig von einer Schutzabdeckung 5 übergriffen, die eine Zapfwelle 6 des Fahrzeugs oberseitig überdeckt. Diese Schutzabdeckung 5 ist über ein Rastgelenk 7 an den Wangen 2 abgestützt, um den Schwenkwinkel der Schutzabdeckung 5 den jeweiligen Bedürfnissen anpassen zu können.

In die Wangen 2 ist jeweils eine vertikale Führungsnut 8 eingeformt, die zur Aufnahme einer nicht dargestellten, höhenverstellbaren Kupplungsvorrichtung dient. Zur Arretierung dieser Kupplungsvorrichtung weisen die Wangen 2 im Bereich der vertikalen Führungsnut 8 Bohrungen 9 auf, in die Rastbolzen der Kupplungsvorrichtung zu deren Arretierung in unterschiedlichen Höhenlagen eingreifen können.

Im Bereich des unteren Endes 10 der Wangen 2 sind an diesen horizontale Führungsnuten 11 angeformt, die zur Aufnahme einer horizontalen Platte 12 dienen. Auf dieser Platte 12 ist ein Kupplungsglied 13 in Form einer Kugelkopfkupplung gehalten. Alternativ könnte als Kupplungsglied 13 auch ein Piton angebracht sein. Dieser besitzt im Gegensatz zur Kugelkopfkupplung eine zylindrische Form.

Auf der Platte 12 ist außerdem ein Sperrhebel 14 um eine Achse 15 verschwenkbar abgestützt. Dieser Sperrhebel 14 drückt eine nicht dargestellte Kuppelöse von oben gegen das Kupplungsglied 13, um ein Lösen der Verbindung zum Anhänger während der Fahrt zu verhindern. Um den Sperrhebel 14 in der dargestellten Sperrlage zu halten, ist dieser mittels eines Sperrbolzens 16 arretierbar.

Im Betrieb kommt es vor, daß die Kugelkopfkupplung 13 beispielsweise durch einen Piton ersetzt werden muß. In diesem Fall würde es nicht ausreichen, lediglich das Kupplungsglied 13 zu ersetzen, da auch der Sperrhebel 14 an das neue Kupplungsglied 13 angepaßt werden muß. Es ist daher vorgesehen, die Platte 12 in die horizontalen Führungsnuten 11 der Wangen 2 einschiebbar auszubilden. Damit kann der Kupplungsaufbau, bestehend aus der Platte 12, dem Kupplungsglied 13 und dem Sperrhebel 14, einfach ausgewechselt werden, ohne die schweren Wangen 2 vom Fahrzeugheck demontieren zu müssen.

Um bei der Übertragung der Zugkräfte ein Herausziehen der Platte 2 aus den horizontalen Führungsnuten 11 zu verhindern, weisen die Wangen 2 beidseits der Führungsnuten 11 Laschen 17 auf, die von Steckbolzen 18 durchdrungen sind. Jeder Steckbolzen 18 besitzt eine horizontale Bohrung 19, in die ein Sicherungsstift 20 einsteckbar ist. Dieser Sicherungsstift 20 durchdringt eine horizontale Bohrung 21 der Wange 2, so daß der Sicherungsstift 20 den Steckbolzen 18 in einer die Platte 12 festlegenden Lage arretiert. Der Sicherungsstift 20 weist außerdem einen federnden Bügel 22 auf, der den Steckbolzen 18 umgreift und damit ein versehentliches Herausziehen des Sicherungsstiftes 20 aus den Bohrungen 19, 21 verhindert.

Die Steckbolzen 18 sind in entsprechenden Bohrungen der Lasche 17 sowie der Platte 12 mit Spiel einschiebbar, um ein leichtgängiges Einstecken des Steckbolzens 19 zu ermöglichen. Aufgrund des vorgenannten Spiels, das der Steckbolzen 18 in den Bohrungen der Lasche 17 bzw. der Platte 12 besitzt, könnten beim Anfahren bzw. Bremsen des Fahrzeugs Stöße auf den Steckbolzen 18 übertragen werden. Dies würde zu einem erhöhten Verschleiß des Steckbolzen 18 sowie der Lasche 17 führen. Zur Vermeidung dieses erhöhten Verschleißes sind die Wangen 2 im Bereich der horizontalen Führungsnut 11 durchbohrt und von Schrauben 23 durchdrungen. Diese Schrauben 23 drücken eine in die Führungsnut 11 eingelegte Leiste 24 stirnseitig gegen die Platte 12, so daß diese gegen die Steckbolzen 18 verspannt wird.

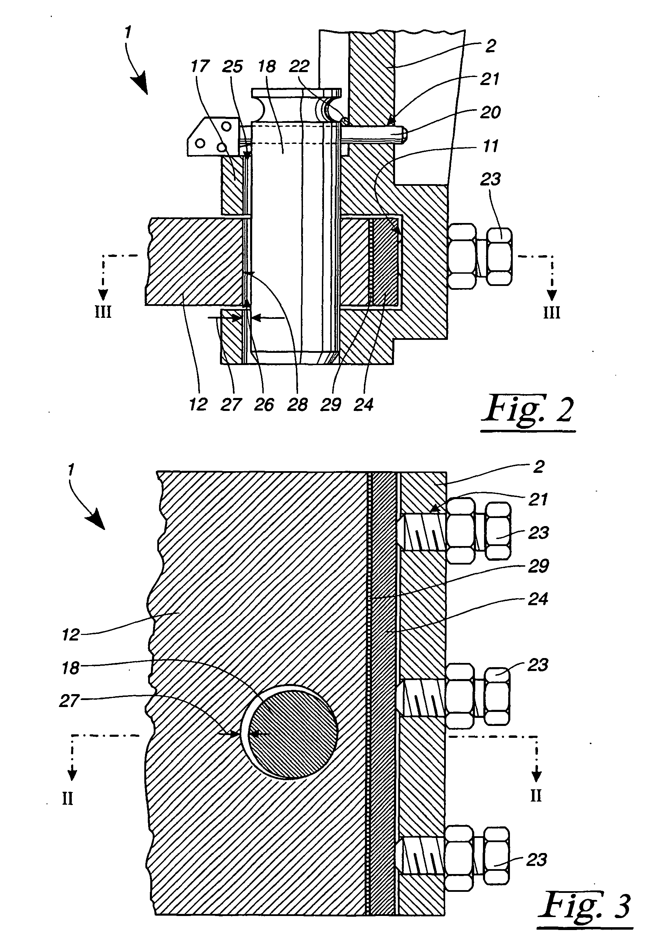

Figur 2 zeigt eine Schnittdarstellung durch die Anhängerkupplung 1 gemäß Figur 1 entlang der Schnittlinie II-II. Aus dieser Darstellung ist insbesondere die Bohrung 21 der Wange 2 zur Aufnahme des Sicherungsstiftes 20 zu ersehen.

Der Steckbolzen 18 durchdringt eine Bohrung 25 der Lasche 17 sowie eine weitere Bohrung 26 der Platte 12. Ein Spiel 27 des Steckbolzens 18 in der Bohrung 26 ist in Figur 2 übertrieben dargestellt, um es besser erkennen zu können.

Die Schrauben 23 drücken die Leiste 24 stirnseitig gegen die Platte 12, so daß eine einseitige Anlage des Steckbolzens 18 an einer Innenwandung 28 der Bohrung 26 gegeben ist. Damit wird die Wirkung des Spiels 27 ausgeschaltet, so daß keine Stöße zwischen dem Steckbolzen 18 und der Platte 12 sowie der Lasche 17 auftreten. Zusätzlich weist die Leiste 24 eine zur Platte 12 gerichtete Profilierung 29 auf, die später näher erläutert wird.

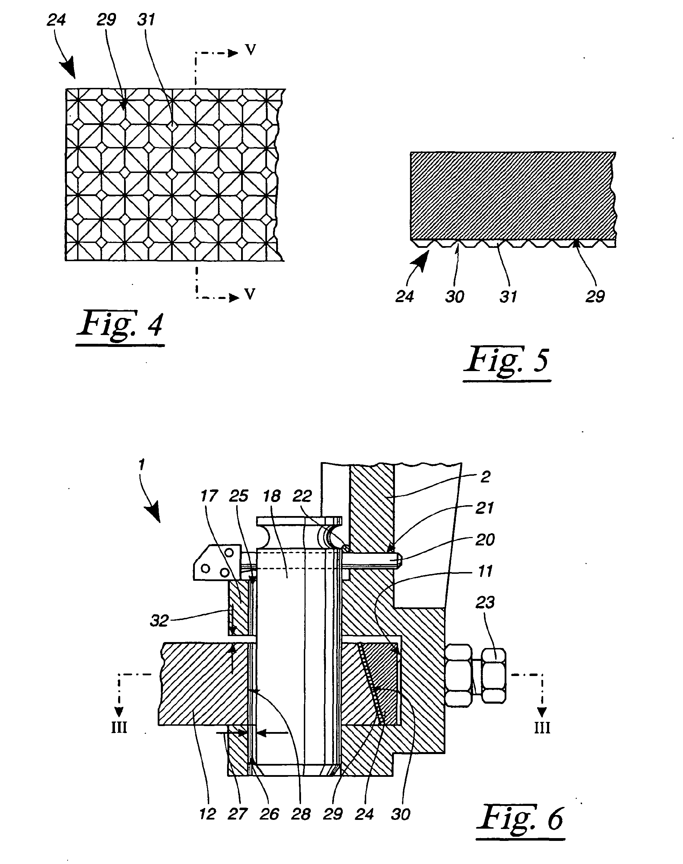

Figur 3 zeigt eine zugeordnete Schnittdarstellung durch die Anhängerkupplung 1 gemäß Figur 2 entlang der Schnittlinie III-III. Aus dieser Darstellung ist insbesondere zu ersehen, daß die Schrauben 23 stumpf gegen die Leiste 24 drücken. Zur Erzielung eines guten Halts der Platte 12 an der Leiste 24 ist letztere profiliert.

Die Profilierung 29 der Leiste 24 ist insbesondere aus den zugeordneten Darstellungen gemäß den Figuren 4 und 5 zu ersehen. Aus der der Platte 12 zugewandten Oberfläche 30 der Leiste 24 ragen Pyramidenstümpfe 31 hervor, deren Höhe zwischen 1 mm und 2 mm, vorzugsweise 1,5 mm, beträgt. Die Pyramidenstümpfe 31 besitzen einen quadratischen Grundriß, was insbesondere aus Figur 4 zu ersehen ist.

Alternativ wäre es auch vorstellbar, die Profilierung 29 statt auf der Leiste 24 auf der Platte 12 vorzusehen.

Figur 6 zeigt eine Schnittdarstellung gemäß Figur 2 einer alternativen Ausführungsform der Anhängerkupplung 1, wobei gleiche Bezugszeichen gleiche Teile benennen. Bei dieser Ausführungsform ist die Leiste 24 keilförmig ausgebildet, wobei die Platte 12 einen hierzu passenden trapezförmigen Querschnitt aufweist. Beim Festziehen der Schrauben 23 ergibt sich neben der gewünschten Ausschaltung des Spiels 27 des Steckbolzens 18 eine zusätzliche, nach unten gerichtete Kraft auf die Platte 12. Aufgrund dieser Kraft wird auch ein vertikales Spiel 32 der Platte 12 in der Führungsnut 11 ausgeschaltet. Die Platte 12 ist demnach in allen Richtungen spielfrei in den Führungsnuten 11 der Wangen 2 gehalten.

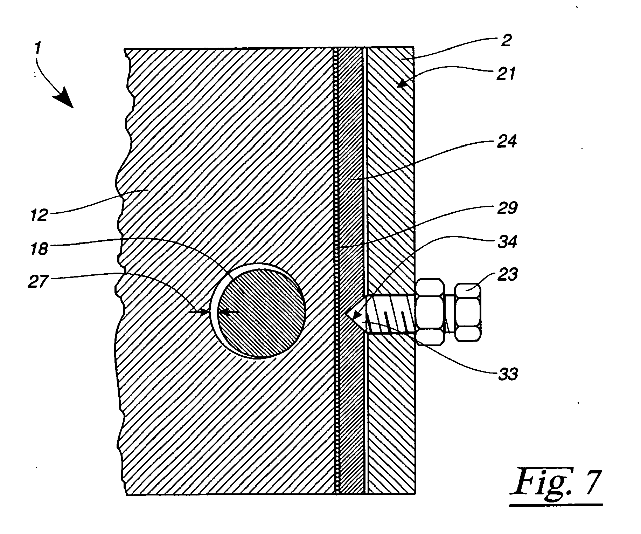

Figur 7 zeigt eine weitere alternative Ausführungsform der Anhängerkupplung 1 gemäß Figur 3, wobei gleiche Bezugszeichen wiederum gleiche Teile benennen. Im Unterschied zum Ausführungsbeispiel gemäß Figur 3 ist die Wange 2 von nur einer Schraube 23 durchdrungen, die fluchtend auf den Steckbolzen 18 ausgerichtet ist. Die Schraube 23 besitzt einen kegelförmigen Endbereich 33, der in eine entsprechend konisch geformte Ausnehmung 34 der Leiste 24 eindringt. Durch das Zusammenwirken des kegelförmigen Endbereichs 33 mit der konischen Ausnehmung 34 ergibt sich eine ausreichend sichere Zentrierwirkung der Platte 12, so daß eine einzige Schraube 23 zur Ausschaltung des Spiels 27 ausreicht.

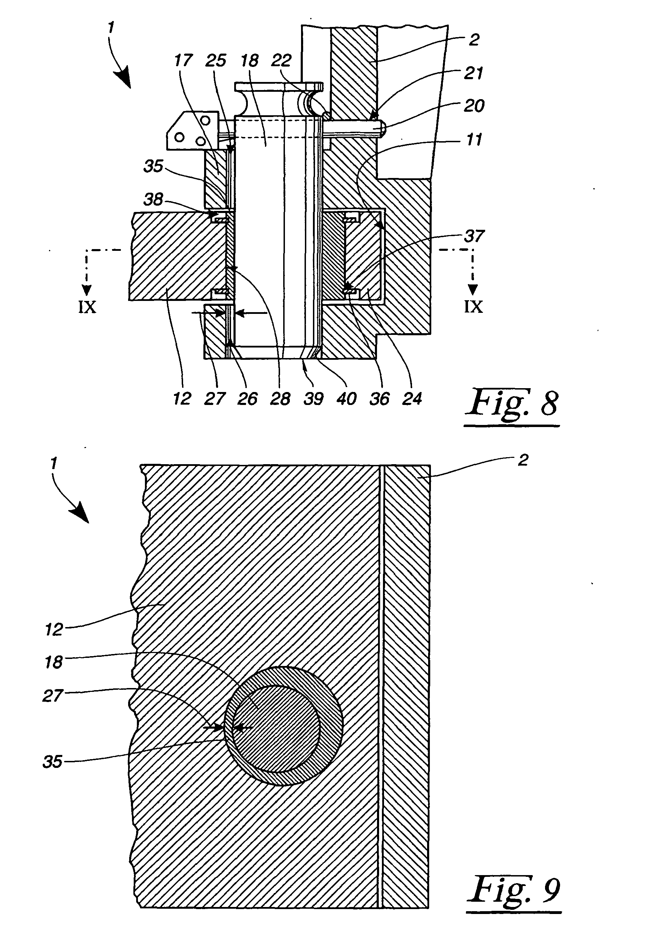

Die zugeordneten Schnittdarstellungen gemäß den Figuren 8 und 9 zeigen ein weiteres, alternatives Ausführungsbeispiel der Anhängerkupplung 1 gemäß den Figuren 2 und 3, wobei gleiche Bezugszeichen wiederum gleiche Teile benennen. Bei dieser Ausführungsform ist zur Ausschaltung des Spiels 27 des Steckbolzens 18 an der Platte 12 ein Exzenter 35 abgestützt. Dieser Exzenter 35 liegt an der Innenwandung 28 der Bohrung 26 der Platte 12 an.

Damit der Exzenter 35 nicht verloren geht, ist er mittels zweier Sicherungsringe 36 gehalten, die in entsprechend geformte Ringnuten 37 des Exzenters 35 eingreifen. Die Bohrung 26 der Platte 12 weist beidendig stufige Erweiterungen 38 auf, um einen Raum zur Aufnahme der Sicherungsringe 36 zu schaffen.

Um den Steckbolzen 18 spielfrei montieren zu können, wird der Exzenter 35 zunächst in seine Extremlage gebracht. Der Steckbolzen 18 weist an seinem unteren Ende 39 eine Fase 40 auf. Sobald der Steckbolzen 18 in den Exzenter 35 eingesteckt wird, sorgt die Fase 40 für ein korrektes Verdrehen des Exzenters 35, so daß sich eine spielfreie Verbindung zwischen dem Steckbolzen 18 und der Platte 12 ergibt.

### Bezugszeichenliste

- 1: Anhängerkupplung
- 2: Wange
- 3: Befestigungslasche
- 4: Durchgangsbohrung
- 5: Schutzabdeckung
- 6: Zapfwelle
- 7: Rastgelenk
- 8: vertikale Führungsnut
- 9: Bohrung
- 10: unteres Ende der Wange
- 11: horizontale Führungsnut
- 12: Platte
- 13: Kupplungsglied
- 14: Sperrhebel
- 15: Achse
- 16: Sperrbolzen
- 17: Lasche
- 18: Steckbolzen
- 19: horizontale Bohrung des Steckbolzens
- 20: Sicherungsstift
- 21: horizontale Bohrung der Wange
- 22: federnder Bügel
- 23: Schraube
- 24: Leiste
- 25: Bohrung der Lasche
- 26: Bohrung der Platte
- 27: horizontales Spiel
- 28: Innenwandung der Bohrung
- 29: Profilierung
- 30: Oberfläche der Leiste
- 31: Pyramidenstumpf
- 32: vertikales Spiel
- 33: kegelförmiger Endbereich
- 34: Ausnehmung
- 35: Exzenter
- 36: Sicherungsring
- 37: Ringnut des Exzenters
- 38: stufige Erweiterung der Bohrung
- 39: unteres Ende des Steckbolzens
- 40: Fase

## Patentansprüche

1. Anhängerkupplung für ein Fahrzeug, insbesondere für einen Ackerschlepper, wobei die Anhängerkupplung (1) zwei vertikale Wangen (2) aufweist, die am Fahrzeugheck abgestützt sind und an denen eine horizontale Platte (12) gehalten ist, welche ein Kupplungsglied (13) trägt, **dadurch gekennzeichnet, daß** die Platte (12) lösbar in einander zugewandten, horizontalen Führungsnuten (11) der Wangen (2) einschiebbar und daran durch mindestens einen Steckbolzen (18) arretierbar ist, der in einen Exzenter (35) eingreift, der in einer Bohrung (26) der Platté (12) gehalten ist.

2. Anhängerkupplung nach Anspruch 1, **dadurch gekennzeichnet, daß** der Steckbolzen (18) in einer vertikalen Führungsnut (8) oder Bohrung (25) der Wange (2) gehalten ist.

3. Anhängerkupplung nach Anspruch 1 oder 2, **dadurch gekennzeichnet, daß** der Steckbolzen (18) von mindestens einer Querbohrung (19) durchsetzt ist, die in einer die Platte (12) arretierenden Lage mit einer horizontalen Bohrung (21) der Wange (2) fluchtet, wobei die Querbohrung (21) von einem Sicherungsstift (20) durchsetzbar ist, der zur Sicherung des Steckbolzens (18) in die horizontale Bohrung (21) der Wange (2) eingreift.

4. Anhängerkupplung nach mindestens einem der Ansprüche 1 bis 3, **dadurch gekennzeichnet, daß** der Steckbolzen (18) einen rechteck- oder kreisförmigen Querschnitt aufweist.

5. Anhängerkupplung nach mindestens einem der Ansprüche 1 bis 4, **dadurch gekennzeichnet, daß** der Exzenter (35) verdrehbar an der Platte (12) oder der Wange (2) gehalten ist.

6. Anhängerkupplung nach mindestens einem der Ansprüche 1 bis 5, **dadurch gekennzeichnet, daß** in der horizontalen Führungsnut (11) mindestens eine stirnseitig gegen die Platte (12) drückende Leiste (24) gehalten ist.

7. Anhängerkupplung nach mindestens einem der Ansprüche 1 bis 6, **dadurch gekennzeichnet, daß** mindestens eine der Wangen (2) im Bereich der horizontalen Führungsnut (11) mindestens eine Gewindebohrung (21) aufweist, die von einer gegen eine Stirnfläche der Platte (12) oder Leiste (24) drückenden Schraube (23) durchsetzt ist.

8. Anhängerkupplung nach Anspruch 7, **dadurch gekennzeichnet, daß** die Schraube (23) fluchtend auf den Steckbolzen (18) ausgerichtet ist.

9. Anhängerkupplung nach Anspruch 7 oder 8, **dadurch gekennzeichnet, daß** die mindestens eine Schraube (23) in eine stirnseitige Vertiefung (34) der Platte (12) oder Leiste (24) eintaucht, wobei das Schraubenende (33) konisch oder ballig gerundet ausgebildet und an die Form der Vertiefung (34) angepaßt ist.

10. Anhängerkupplung nach mindestens einem der Ansprüche 6 bis 9, **dadurch gekennzeichnet, daß** die Platte (12) und die Leiste (24) zueinander passende Schrägflächen (30) aufweisen, wobei die Platte (12) und/oder die Leiste (24) im Anlagebereich eine strukturierte Oberfläche (30) aufweisen.

## Claims

1. Trailer hitch for a vehicle, especially for an agricultural tractor, the trailer hitch (1) having two vertical cheeks (2) which are supported on the vehicle rear and on which is held a horizontal plate (12) which bears a hitch element (13), **characterized in that** the plate (12) is pushable releasably into mutually facing, horizontal guide grooves (11) of the cheeks (2) and is lockable thereto by means of at least one socket pin (18) which engages in an eccentric (35) which is held in a hole (26) in the plate (12).

2. Trailer hitch according to Claim 1, **characterized in that** the socket pin (18) is held in a vertical guide groove (8) or hole (25) in the cheek (2).

3. Trailer hitch according to Claim 1 or 2, **characterized in that** the socket pin (18) is penetrated by at least one transverse hole (19) which, in a position locking the plate (12), is aligned with a horizontal hole (21) in the cheek (2), it being possible for the transverse hole (21) to be penetrated by a securing pin (20) which engages in the horizontal hole (21) in the cheek (2) to secure the socket pin (18).

4. Trailer hitch according to at least one of Claims 1 to 3, **characterized in that** the socket pin (18) has a rectangular or circular cross section.

5. Trailer hitch according to at least one of Claims 1 to 4, **characterized in that** the eccentric (35) is held rotatably on the plate (12) or the cheek (2).

6. Trailer hitch according to at least one of Claims 1 to 5, **characterized in that** at least one strip (24) pressing on the end side against the plate (12) is held in the horizontal guide groove (11).

7. Trailer hitch according to at least one of Claims 1 to 6, **characterized in that** at least one of the cheeks (2) has, in the region of the horizontal guide groove (11), at least one threaded hole (21) which is penetrated by a screw (23) pressing against an end surface of the plate (12) or strip (24).

8. Trailer hitch according to Claim 7, **characterized in that** the screw (23) is aligned flush with the socket pin (18).

9. Trailer hitch according to Claim 7 or 8, **characterized in that** the at least one screw (23) enters a depression (34) on the end side of the plate (12) or strip (24), the screw end (33) being of conical or spherically rounded design and being matched to the shape of the depression (34).

10. Trailer hitch according to at least one of Claims 6 to 9, **characterized in that** the plate (12) and the strip (24) have mutually matching oblique surfaces (30), the plate (12) and/or the strip (24) having a structured surface (30) in the bearing region.

## Revendications

1. Attelage de remorque pour un véhicule, notamment pour un tracteur agricole, dans lequel l'attelage de remorque (1) présente deux parois verticales (2) qui sont supportées à l'arrière du véhicule, et sur lesquelles est maintenue une plaque horizontale (12), qui porte un organe d'accouplement (13), **caractérisé en ce que** la plaque (12) peut être enfoncée de manière détachable dans des rainures de guidage horizontales (11) des parois (2), tournées l'une vers l'autre, et peut y être bloquée par au moins un goujon d'enfichage (18) qui vient en prise dans un excentrique (35) qui est maintenu dans un alésage (26) de la plaque (12).

2. Attelage de remorque selon la revendication 1, **caractérisé en ce que** le goujon d'enfichage (18) est maintenu dans une rainure de guidage (8) ou un alésage (25) vertical de la paroi (2).

3. Attelage de remorque selon la revendication 1 ou 2, **caractérisé en ce que** le goujon d'enfichage (18) est traversé par au moins un alésage transversal (19), qui est aligné, dans une position bloquant la plaque (12), avec un alésage horizontal (21) de la paroi (2), l'alésage transversal (21) pouvant être traversé par une goupille de fixation (20) qui vient en prise dans l'alésage horizontal (21) de la paroi (2) pour fixer le goujon d'enfichage (18).

4. Attelage de remorque selon au moins l'une quelconque des revendications 1 à 3, **caractérisé en ce que** le goujon d'enfichage (18) présente une section transversale rectangulaire ou circulaire.

5. Attelage de remorque selon au moins l'une quelconque des revendications 1 à 4, **caractérisé en ce que** l'excentrique (35) est maintenu de manière rotative sur la plaque (12) ou la paroi (2).

6. Attelage de remorque selon au moins l'une quelconque des revendications 1 à 5, **caractérisé en ce que** dans la rainure de guidage horizontale (11) est maintenue au moins une tige (24) pressant du côté frontal contre la plaque (12).

7. Attelage de remorque selon au moins l'une quelconque des revendications 1 à 6, **caractérisé en ce qu'**au moins l'une des parois (2) présente dans la région de la rainure de guidage horizontale (11) au moins un alésage fileté (21) qui est traversé par une vis (23) pressant contre une face frontale de la plaque (12) ou de la tige (24).

8. Attelage de remorque selon la revendication 7, **caractérisé en ce que** la vis (23) est orientée en affleurement avec le goujon d'enfichage (18).

9. Attelage de remorque selon la revendication 7 ou 8, **caractérisé en ce que** l'au moins une vis (23) pénètre dans un renfoncement (34) du côté frontal de la plaque (12) ou de la tige (24), l'extrémité de la vis (33) étant réalisée avec une forme conique ou bombée arrondie et étant adaptée à la forme du renfoncement (34).

10. Attelage de remorque selon au moins l'une quelconque des revendications 6 à 9, **caractérisé en ce que** la plaque (12) et la tige (24) présentent des faces obliques (30) adaptées l'une à l'autre, la plaque (12) et/ou la tige (24) présentant dans la région d'appui une surface structurée (30).
